# EUROPÄISCHE PATENTSCHRIFT

(11) **EP 3 497 495 B1**
(45) Veröffentlichungstag und Bekanntmachung des Hinweises auf die Patenterteilung: **11.03.2020**
(21) Anmeldenummer: 17768354.7
(22) Anmeldetag: 28.07.2017
(51) Int. Cl.: G02B 6/30, G02B 6/34, G02B 6/36, G02B 6/42

(54) **PHOTONISCHES BAUELEMENT**
PHOTONIC COMPONENT
COMPOSANT PHOTONIQUE

(30) Priorität: 12.08.2016 DE 102016215076
(43) Veröffentlichungstag der Anmeldung: 19.06.2019
(73) Patentinhaber: Sicoya GmbH, 12489 Berlin (DE)
(72) Erfinder: GREHN, Moritz, 10245 Berlin (DE); OTTE, Sven, 16540 Hohen Neuendorf (DE); THEISS, Christoph, 14169 Berlin (DE); MEISTER, Stefan, 12587 Berlin (DE); SELICKE, David, 12105 Berlin (DE); RHEE, Hanjo, 10439 Berlin (DE)
(74) Vertreter: Fischer, Uwe
(86) Internationale Anmeldenummer: PCT/DE2017/200075
(87) Internationale Veröffentlichungsnummer: WO 2018/028751

(56) Entgegenhaltungen:
- DE-A1- 4 445 997
- US-A1- 2013 209 026
- US-A1- 2014 029 894
- US-A1- 2016 018 601
- HSIAO-CHIN LAN ET AL: "Monolithic integration of elliptic-symmetry diffractive optical element on silicon-based 45° micro-reflector", OPTICS EXPRESS, Bd. 17, Nr. 23, 2. November 2009 (2009-11-02), Seiten 20938-20944, XP055425102,

## Beschreibung

Die deutsche Patentschrift DE 44 45 997 offenbart ein photonisches Bauelement mit einem photonisch integrierten Chip und einer mit dem Chip mechanisch verbundenen Faserhalterung, wobei die Faserhalterung zumindest eine Nut, in die eine optische Faser eingelegt ist, und zumindest eine Spiegelfläche, die Strahlung der Faser in Richtung des Chips und/oder Strahlung des Chips in Richtung der Faser spiegelt, aufweist..

Ein photonisches Bauelement mit den Merkmalen gemäß dem Oberbegriff des Patentanspruchs 1 ist aus der US-Offenlegungsschrift US 2016/018601 A1 bekannt.

Aus der US-Offenlegungsschrift 2013/209026 A1 ist photonisches Bauelement mit einer Linse zur Strahlformung bekannt.

Der Erfindung liegt die Aufgabe zugrunde, ein photonisches Bauelement anzugeben, das sich kostengünstig fertigen lässt und einen möglichst kompakten Aufbau aufweist.

Diese Aufgabe wird erfindungsgemäß durch ein photonisches Bauelement mit den Merkmalen gemäß Patentanspruch 1 gelöst. Vorteilhafte Ausgestaltungen des erfindungsgemäßen Bauelements sind in Unteransprüchen angegeben.

Ein wesentlicher Vorteil des erfindungsgemäßen Bauelements ist darin zu sehen, dass durch die Integration von Wellenleiter, Koppler und Beugungs- und Brechungsstruktur in den Chip einerseits und die erfindungsgemäße Anordnung der Beugungs- und Brechungsstruktur im Strahlweg zwischen Koppler und Spiegelfläche andererseits in sehr einfacher Weise optimale Kopplungsverhältnisse geschaffen werden können.

Ein weiterer Vorteil des erfindungsgemäßen Bauelements besteht darin, dass dieses sehr reproduzierbar herstellbar ist, da die für eine Kopplung relevanten Komponenten, nämlich die Beugungs- und Brechungsstruktur sowie der Gitterkoppler bereits im Rahmen der chipseitigen Herstellung gefertigt werden können.

Ein weiterer Vorteil des erfindungsgemäßen Bauelements ist darin zu sehen, dass durch die erfindungsgemäße Anordnung von integriertem optischem Wellenleiter, Koppler, Beugungs- und Brechungsstruktur und Spiegelfläche ein sehr kompakter Aufbau erreicht werden kann, weil in vorteilhafter Weise eine 180°-Strahlumlenkung vorgesehen werden kann. So kann vorgesehen sein, dass die Ausbreitungsrichtung von Strahlung, die von einer mittels der Faserhalterung gehaltenen Faser in den Chip gekoppelt werden soll und in der Faser also in Richtung Spiegelfläche gerichtet ist, invers zu der Ausbreitungsrichtung ist, die die Strahlung nachfolgend in dem im Chip integrierten Wellenleiter aufweist. Im Falle einer unterschiedlichen Strahlausbreitungsrichtung lässt sich beispielsweise erreichen, dass der integrierte optische Wellenleiter unterhalb derjenigen Faser und parallel zu dieser verläuft, mit der er optisch gekoppelt ist.

Ein weiterer Vorteil des erfindungsgemäßen Bauelements besteht darin, dass die Wärmeausdehnungskoeffizienten von Chip und Faserhalterung gleich oder zumindest weitgehend gleich sind, weil sich die Substratgrundmaterialien entsprechen.

Unter dem Begriff "Substratgrundmaterial" wird hier das eigentliche Basismaterial wie beispielsweise Silizium, Germanium, InP, GaAs, usw. verstanden, unabhängig von etwaigen Verschmutzungen oder Dotierungen; das Substrat des Chips und das Substrat der Faserhalterung können also in der Art der Dotierung (p- oder n-Dotierung) oder in der Dotierungskonzentration durchaus unterschiedlich sein. Unterschiedliche Dotierungen der Substrate haben keinen oder zumindest keinen relevanten Einfluss auf die Wärmeausdehnungskoeffizienten.

Eine Nutendfläche der Nut oder eine oder auf der Nutendfläche aufgebrachte Schicht bildet vorzugsweise die Spiegelfläche, die Strahlung der Faser in Richtung des Chips und/oder Strahlung des Chips in Richtung der Faser spiegelt.

Die optische Beugungs- und Brechungsstruktur liegt vorzugsweise im Strahlweg zwischen dem Koppler und der Nutendfläche.

Der integrierte optische Wellenleiter und die Faser sind, zumindest im Bereich des Kopplers, vorzugsweise übereinander angeordnet und dort parallel zueinander ausgerichtet.

Die Spiegelfläche spiegelt von der Faser kommende Strahlung vorzugsweise in Richtung des Chips mit zwei Richtungskomponenten, von denen eine senkrecht zur Ausbreitungsrichtung der Strahlung in der Faser und die andere entgegengesetzt zur Ausbreitungsrichtung der Strahlung in der Faser ist und die durch den Koppler in den optischen Wellenleiter gekoppelte Strahlung sich entgegengesetzt zur Ausbreitungsrichtung der Strahlung in der Faser ausbreitet.

Die Beugungs- und Brechungsstruktur liegt vorzugsweise in einer Ebene parallel zu der wellenführenden Materialschicht bzw. den wellenführenden Materialschichten.

Die Nut weist vorzugsweise einen sich lateral aufweitenden und vertikal vertiefenden Abschnitt, nachfolgend Taperabschnitt genannt, auf.

Der Taperabschnitt erstreckt sich bei einer bevorzugten Ausführungsvariante bis zur Nutendfläche und wird - in Richtung von der Nutendfläche weg - breiter und tiefer. Durch das Tieferwerden der Nut stehen die Längsrichtung der Faser und die Ebene der oberen Nutöffnungsfläche vorzugsweise in einem Winkel zwischen 0,1° und 40° zueinander oder sind vorzugsweise zumindest nicht parallel zueinander.

Der Öffnungswinkel des Taperabschnitts liegt vorzugsweise in einem Bereich zwischen 0,1° und 11°.

Durch das Tieferwerden der Nut weist die Ebene der Spiegelfläche besonders bevorzugt einen Winkel zwischen 39,4° und 54,6° zur Längsachse der Faser auf; dadurch wird erreicht, dass die Spiegelfläche von der Faser kommende Strahlung in Richtung des Chips mit einer Richtungskomponente spiegelt, die entgegengesetzt zur Ausbreitungsrichtung der Strahlung in der Faser ist und sich die durch den Koppler in den optischen Wellenleiter gekoppelte Strahlung entgegengesetzt zur Ausbreitungsrichtung der Strahlung in der Faser ausbreitet.

Die Nut kann einen - von der Nutendfläche aus gesehen - hinter dem Taperabschnitt angeordneten Halteabschnitt aufweisen, dessen Nutbreite und Nuttiefe konstant ist.

Der Taperabschnitt kann - in Längsrichtung der Faser gesehen - für die Faser einen Anschlag bilden, der von der Nutendfläche beabstandet ist.

Bei einer anderen vorteilhaften Ausführungsform ist vorgesehen, dass die Nut einen vor der Nutendfläche angeordneten Halteabschnitt aufweist, dessen Nutbreite und Nuttiefe konstant ist. Der Taperabschnitt verbindet den Halteabschnitt mit einer Nutendöffnung, die an dem von der Nutendfläche entfernten Ende der Nut angeordnet ist und durch die die Faser aus der Nut heraus nach außen geführt ist. Der Taperabschnitt vereinfacht das Einführen der Faser in die Nut, insbesondere, wenn diese in Faserlängsrichtung eingeschoben wird.

Bei einer noch anderen vorteilhaften Ausführungsform ist vorgesehen, dass sich ein Taperabschnitt bis zur Nutendfläche erstreckt und - in Richtung von der Nutendfläche weg - schmaler und flacher wird. Vorzugsweise stehen durch das Flacherwerden der Nut die Längsrichtung der Faser und die Ebene der oberen Nutöffnungsfläche in einem Winkel zwischen 0,1° und 10,5° zueinander oder sind vorzugsweise zumindest nicht parallel zueinander.

Das Substrat der Faserhalterung ist vorzugsweise ein Siliziumsubstrat. Die Nut ist vorzugsweise eine in das Siliziumsubstrat geätzte, im Querschnitt V-förmige Nut.

Die Nutwände der Nut und/oder die Nutendfläche sind bevorzugt durch eine (111)-Kristallebene oder eine dazu äquivalente bzw. eine aus Symmetriegründen dazu als gleichwertig anzusehende Kristallebene, insbesondere die (1-1-1)-Kristallebene des Siliziumsubstrats, gebildet.

Die Oberfläche des Siliziumsubstrats der Faserhalterung ist bevorzugt durch eine (100)-Kristallebene gebildet. Die Ebene der oberen Nutöffnungsfläche liegt vorzugsweise parallel zur (100)-Kristallebene des Siliziumsubstrats.

Alternativ kann vorgesehen sein, dass das Substrat der Faserhalterung ein sogenanntes Off-Axis-Substrat, insbesondere ein Silizium-Off-Axis-Substrat ist.

Der Winkel zwischen der Oberfläche des Substrats der Faserhalterung und der (100)-Kristallebene des Substrats liegt vorzugsweise zwischen 0,1° und 9,5°. Durch einen solchen Fehlwinkel lässt sich beim Ätzen der Nuten eine automatische Taperung (also ein Aufweiten und Tieferwerden oder ein Verjüngen und Flacherwerden) der Nuten erreichen, wobei das Flacher- oder Tieferwerden der Nuten einen optimalen Winkel zwischen der in der Nut liegenden Faser und der Spiegelfläche hervorruft.

Bezüglich der Faserbefestigung wird es als vorteilhaft angesehen, wenn die Faser mit einer Metallisierungsschicht beschichtet ist und die Metallisierungsschicht der Faser mit Nutwänden der Nut verlötet ist. Aufgrund der höheren Prozesstemperaturen beim Löten der Fasern im Vergleich zu einer Klebeverbindung ergibt sich hieraus eine höhere Flexibilität hinsichtlich nachgeschalteter Prozessschritte, wie beispielsweise beim Löten des Substrats auf den Chip.

Auch ist es vorteilhaft, wenn das Substrat der Faserhalterung mit einer Abstandshalterschicht, insbesondere einer Siliziumdioxidschicht, beschichtet ist. Vorzugsweise schließt die in die Nut eingelegte Faser mit der Abstandshalterschicht höhenmäßig ab oder wird von dieser überragt. Auch kann die Abstandshalterschicht in vorteilhafter Weise - in Längsrichtung der Faser gesehen - einen Anschlag für die Faser bilden.

Mit Blick auf eine einfache Montage wird es darüber hinaus als vorteilhaft angesehen, wenn das Substrat der Faserhalterung mindestens eine konkave Befestigungsausnehmung aufweist, in die ein zugeordneter konvexer Befestigungsabschnitt des Chips eingreift. Alternativ ist auch eine inverse Ausgestaltung denkbar und vorteilhaft, also eine solche, bei der das Substrat der Faserhalterung mindestens einen konvexen Befestigungsabschnitt aufweist, der in eine zugeordnete konkave Befestigungsausnehmung des Chips eingreift.

Besonders bevorzugt basiert der Chip auf SOI (Silicon on Insulator)-Material. Im Falle eines solchen Materialsystems wird es als vorteilhaft angesehen, wenn der integrierte optischen Wellenleiter ein Rippenwellenleiter mit einer Rippe ist, die in einer auf einer Siliziumdioxidschicht befindlichen wellenführenden Siliziumdeckschicht des SOI-Materials ausgebildet ist und deren Längsrichtung sich entlang der Ausbreitungsrichtung der im SOI-Rippenwellenleiter geführten Strahlung erstreckt. Die optische Beugungs- und Brechungsstruktur ist in diesem Falle in einer oder mehreren oberhalb der Siliziumdeckschicht befindlichen Schichten des Chips integriert. Das Substrat der Faserhalterung ist bei dieser Ausführungsform vorzugsweise ein Siliziumsubstrat.

Bei dem Gitterkoppler kann es sich um einen eindimensionalen oder zweidimensionalen Gitterkoppler handeln, der vorzugsweise ebenfalls in der wellenführenden Siliziumdeckschicht ausgebildet ist.

Beispielsweise kann der Gitterkoppler ein diffraktives Element sein, das Strahlung in einen oder mehrere Wellenleiter einkoppelt und vorzugsweise ebenfalls in der wellenführenden Siliziumdeckschicht ausgebildet ist.

Der Gitterkoppler ist vorzugsweise ein Bragg-Gitter oder umfasst ein solches vorzugsweise zumindest auch.

Als besonders vorteilhaft wird es angesehen, wenn der Chip eine mit dem integrierten optischen Wellenleiter in Verbindung stehende Photodiode, die vorzugsweise in dem Substrat des Chips monolithisch integriert ist, aufweist, in ein von der Spiegelfläche der Faserhalterung entferntes Faserende der Faser Strahlung in die Faser eingestrahlt wird und während des Einsetzens der Faser in die Faserhalterung und/oder während des Zusammensetzens von Chip und Faserhalterung das Signal der Photodiode ausgewertet wird und die Justage der Faser in der Faserhalterung und/oder die Justage zwischen dem Chip und der Faserhalterung in Abhängigkeit von dem Signal der Photodiode oder zumindest auch in Abhängigkeit von dem Signal der Photodiode erfolgt.

Die Erfindung wird nachfolgend anhand von Ausführungsbeispielen näher erläutert; dabei zeigen beispielhaft
- Figur 1: in einer dreidimensionalen Explosionsdarstellung ein Ausführungsbeispiel für ein erfindungsgemäßes photonisches Bauelement,
- Figur 2: das Bauelement gemäß Figur 1 in einem Querschnitt,
- Figur 3: das Umlenken optischer Strahlung beim Bauelement gemäß den Figuren 1 und 2 näher im Detail,
- Figur 4: ein Ausführungsbeispiel für eine Linse, die bei dem Bauelement gemäß den Figuren 1 bis 3 eingesetzt werden kann,
- Figur 5: die Struktur der Linse gemäß Figur 4 in einem Querschnitt,
- Figur 6: eine Faserhalterung des photonischen Bauelements gemäß den Figuren 1 bis 3 in einer Draufsicht,
- Figur 7: in einer Draufsicht ein zweites Ausführungsbeispiel für eine Faserhalterung, die bei dem photonischen Bauelement gemäß Figur 1 eingesetzt werden kann,
- Figur 8: die Faserhalterung gemäß Figur 7 im Querschnitt,
- Figur 9: in einer Draufsicht ein drittes Ausführungsbeispiel für eine Faserhalterung, die bei dem photonischen Bauelement gemäß Figur 1 eingesetzt werden kann,
- Figur 10: die Faserhalterung gemäß Figur 9 im Querschnitt,
- Figur 11: ein Ausführungsbeispiel für eine Ätzmaskenstruktur, mit der sich die Nuten der Faserhalterung für die Ausführungsvariante gemäß den Figuren 9 und 10 herstellen lassen,
- Figur 12: ein Ausführungsbeispiel für eine Ätzmaskenstruktur, mit der sich die Faserhalterung gemäß den Figuren 9 und 10 herstellen lässt, wenn ein OffAxis-Substratmaterial eingesetzt wird,
- Figur 13: in einer Draufsicht ein viertes Ausführungsbeispiel für eine Faserhalterung, die bei dem photonischen Bauelement gemäß Figur 1 eingesetzt werden kann,
- Figur 14: die Faserhalterung gemäß Figur 13 im Querschnitt,
- Figur 15: im Querschnitt ein fünftes Ausführungsbeispiel für eine Faserhalterung, die bei dem photonischen Bauelement gemäß Figur 1 eingesetzt werden kann,
- Figur 16: die Faserhalterung gemäß Figur 15 in einer Draufsicht,
- Figur 17: in einer Draufsicht ein Ausführungsbeispiel für eine Faserhalterung mit eingelöteten Fasern,
- Figur 18: die Faserhalterung gemäß Figur 17 im Querschnitt,
- Figur 19: ein Ausführungsbeispiel für eine Faserhalterung, bei der konkave Befestigungsausnehmungen zur Aufnahme zugeordneter konvexer Befestigungsabschnitte des Chips vorgesehen sind, wobei die Figur 19 die Faserhalterung und den Chip vor der Montage zeigt, und
- Figur 20: die Faserhalterung und den Chip gemäß Figur 19 nach einem Zusammensetzen bzw. einem Ineinanderschieben der beiden Teile.

In den Figuren werden der Übersicht halber für identische oder vergleichbare Komponenten stets dieselben Bezugszeichen verwendet.

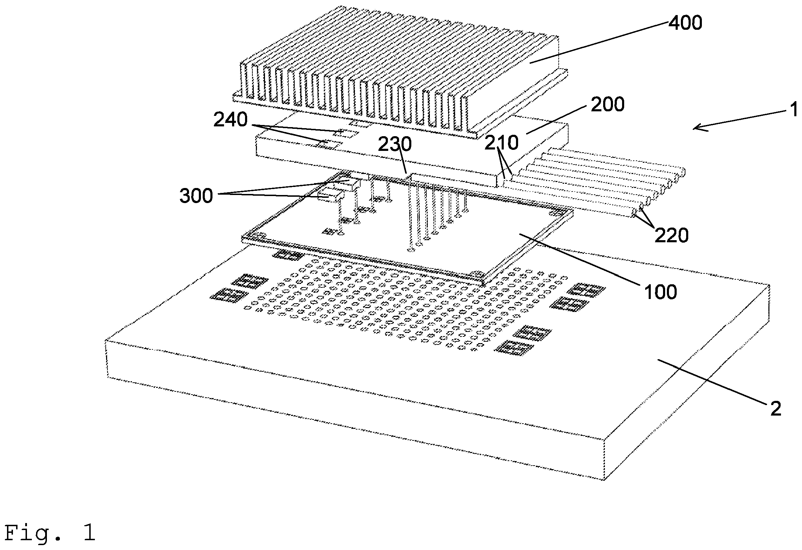

Die Figur 1 zeigt in einer dreidimensionalen Explosionsdarstellung ein Ausführungsbeispiel für ein photonisches Bauelement 1. Das Bauelement 1 umfasst einen photonisch integrierten Chip 100, auf den eine Faserhalterung 200 aufgesetzt ist. Die Faserhalterung 200 weist Nuten 210 auf, in die optische Lichtleitfasern, nachfolgend kurz Fasern 220 genannt, eingelegt sind. Zur Strahlumlenkung von Strahlung, die in die Fasern 220 eingekoppelt oder aus diesen ausgekoppelt werden soll, sind im Bereich der Nutendflächen der Nuten 210 Spiegelflächen 230 vorgesehen.

Bei dem Ausführungsbeispiel gemäß Figur 1 sind auf dem photonisch integrierten Chip 100 Laser 300 montiert, zu deren Kühlung ein Kühlkörper 400 vorgesehen ist. Für eine thermische Kopplung zwischen den Lasern 300 und dem Kühlkörper 400 sind in der Faserhalterung Durchgangslöcher 240 vorgesehen.

Das aus dem Chip 100, der Faserhalterung 200, den Lasern 300 sowie dem Kühlkörper 400 bestehende photonische Bauelement 1 kann beispielsweise auf einer Leiterplatte 2 montiert werden.

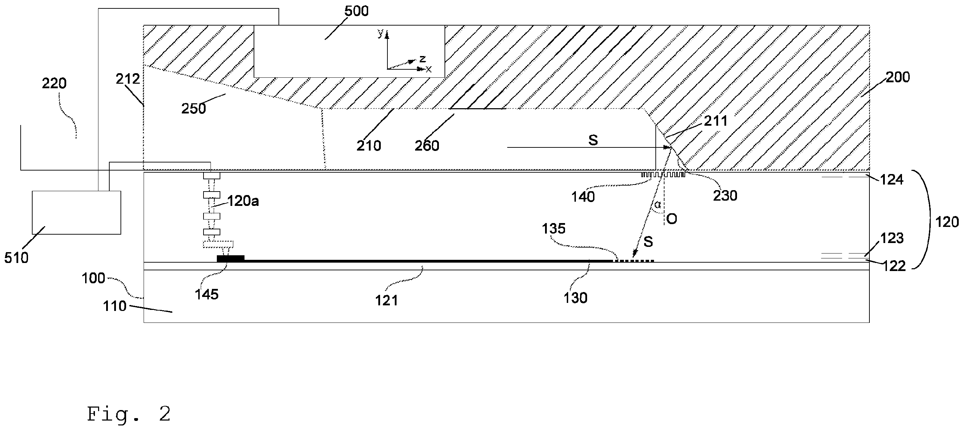

Die Figur 2 zeigt das photonische Bauelement 1 gemäß Figur 1 in einem Querschnitt. Man erkennt eine Faser 220, die in eine Nut 210 der Faserhalterung 200 eingelegt ist. Die Spiegelfläche 230 wird durch die Nutendfläche 211 der Nut 210 oder eine auf der Nutendfläche 211 aufgebrachte, reflektierende Schicht (z. B. Goldschicht) oder ein Schichtpaket gebildet.

Bei dem Ausführungsbeispiel bildet die Nutendfläche 211 der Nut 210 einen Anschlag für die Faser 220; mit anderen Worten stößt also das Faserende der Faser 220 unmittelbar an die Nutendfläche 211 an.

Die Nut 210 umfasst zwei Abschnitte, nämlich einen Taperabschnitt 250 und einen Halteabschnitt 260. Der Taperabschnitt 250 erstreckt sich von einer Nutendöffnung 212, an der die Faser 220 die Faserhalterung 200 verlässt, bis zum Halteabschnitt 260, der sich wiederum vom Taperabschnitt 250 bis zur Nutendfläche 211 erstreckt. Der Taperabschnitt 250 trennt somit die Nutendöffnung 212 vom Halteabschnitt 260.

Der Taperabschnitt 250 wird in Richtung zur Nutendöffnung 212 breiter und tiefer, so dass die Breite und Tiefe des Taperabschnitts 250 im Bereich der Nutendöffnung 212 maximal wird. Durch das Aufweiten und Tieferwerden des Taperabschnitts 250 wird ein Einsetzen der Faser 220 von außen in die Nut 210 hinein erleichtert.

Im Bereich des Halteabschnitts 260 sind die Nutbreite und die Nuttiefe der Nut 210 konstant, wobei die Breite und die Tiefe der Nut 210 derart gewählt sind, dass die Faser 220 eine vorgegebene Lage innerhalb der Faserhalterung 200 einnimmt.

Unterhalb der Faserhalterung 200 ist der Chip 100 angeordnet. Der Chip 100 umfasst ein Substrat 110, bei dem es sich beispielsweise um ein Siliziumsubstrat handeln kann.

Auf dem Substrat 110 ist ein eine Vielzahl an Materialschichten aufweisendes Schichtpaket 120 angeordnet. In dem Schichtpaket 120 sind bei dem Ausführungsbeispiel gemäß Figur 2 ein optischer Wellenleiter 130, ein Gitterkoppler 135, eine Beugungs- und Brechungsstruktur in Form einer Linse 140 und ein Photodetektor 145 integriert.

Die auf dem Substrat 110 befindliche erste bzw. unterste Schicht des Schichtpakets 120 ist eine Siliziumoxidschicht, auf der eine Siliziumschicht 122 aufliegt. In der Siliziumschicht 122 sind der optische Wellenleiter 130 und der Gitterkoppler 135 integriert. Der optische Wellenleiter 130 kann beispielsweise ein so genannter SOI-Rippen- oder Streifenwellenleiter sein, bei dem die optische Strahlung in der Siliziumschicht 122 geführt wird.

Der Photodetektor 145 kann in modifizierten Abschnitten der Siliziumschicht 122 und/oder in einer auf der Siliziumschicht 122 befindlichen anderen Schicht 123, bei der es sich beispielsweise um eine Germanium- oder Silizium-Germanium-Schicht handeln kann, integriert sein.

In der obersten Materialschicht 124 oder zumindest in einer der oberen Materialschichten des Schichtpakets 120 ist die Linse 140 integriert. Die Linse 140 befindet sich also - vom Substrat 110 aus gesehen - oberhalb der wellenführenden Schicht 122 des Schichtpakets 120 bzw. oberhalb der Schicht, in der der Gitterkoppler 135 und der optische Wellenleiter 130 integriert sind.

Die Kontaktierung des Photodetektors 145 kann beispielsweise über Durchgangslöcher 120a erfolgen, die sich durch das Schichtpaket 120 nach oben erstrecken.

In der Figur 2 ist darüber hinaus eine Ausrichteinheit 500 dargestellt, mit der sich die Faserhalterung 200 relativ zum darunter befindlichen Chip 100 in x-, y- und z-Richtung bewegen lässt, um eine optimale Justageposition der Faserhalterung 200 einzustellen, bevor die Teile 100 und 200 fest miteinander verbunden werden. Die Ausrichteinheit 500 wird vorzugsweise von einer Kontrolleinheit 510 angesteuert, die über die Durchgangslöcher 120a mit dem Photodetektor 145 in Verbindung steht und dessen Photostrom bzw. Detektionssignal auswertet. Die Kontrolleinheit 510 ist somit in der Lage, die Faserhalterung 200 mittels der Ausrichteinheit 500 in eine Position zu bringen, in der eine maximale Kopplung von Strahlung zwischen der Faser 220 und dem darunter befindlichen optischen Wellenleiter 130 erzielt wird.

Die Figur 2 lässt darüber hinaus beispielhaft den Strahlverlauf optischer Strahlung S erkennen, die von der Faser 220 in den Chip 100 eingekoppelt wird. Die Strahlung S wird an der Spiegelfläche 230 bzw. an der Nutendfläche 211 reflektiert und fällt unter einem Winkel **α** - bezogen auf die Flächennormale O auf der Oberseite des Schichtpakets 120 - auf die Linse 140. Die Linse 140 bildet eine optische Beugungs- und Brechungsstruktur, die die Strahlung S in Richtung auf den Gitterkoppler 135 lenkt. Der Gitterkoppler 135 koppelt die Strahlung S in den optischen Wellenleiter 130 ein, der die Strahlung zum Photodetektor 145 leitet. Die Ausbreitungsrichtung der Strahlung S in dem optischen Wellenleiter 130 ist vorzugsweise entgegengesetzt zur Ausbreitungsrichtung in der Faser 220, wodurch ein kompakter Aufbau erreicht wird.

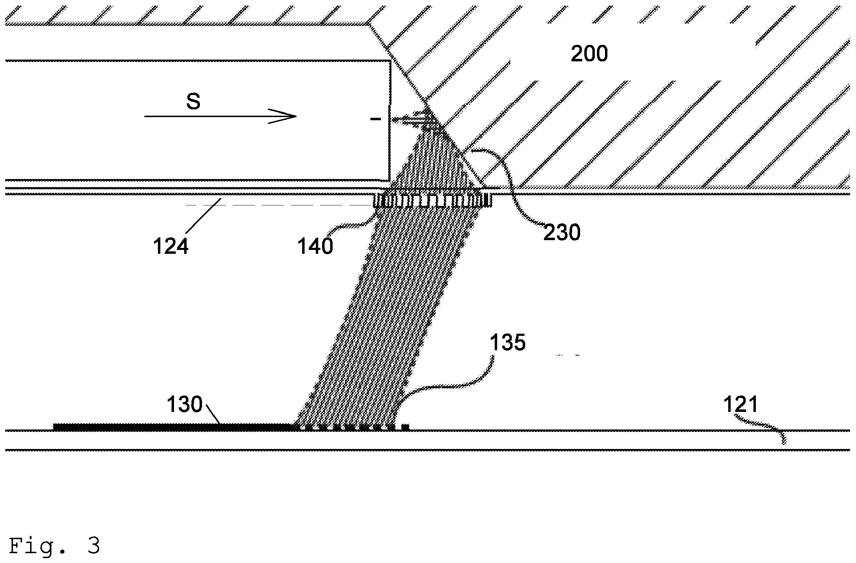

Die Figur 3 zeigt das Umlenken der Strahlung S durch die Spiegelfläche 230 und die Linse 140 näher im Detail. Unter anderem lässt sich erkennen, dass die Linse 140 durch Stufen in der Materialschicht 124 gebildet sein kann.

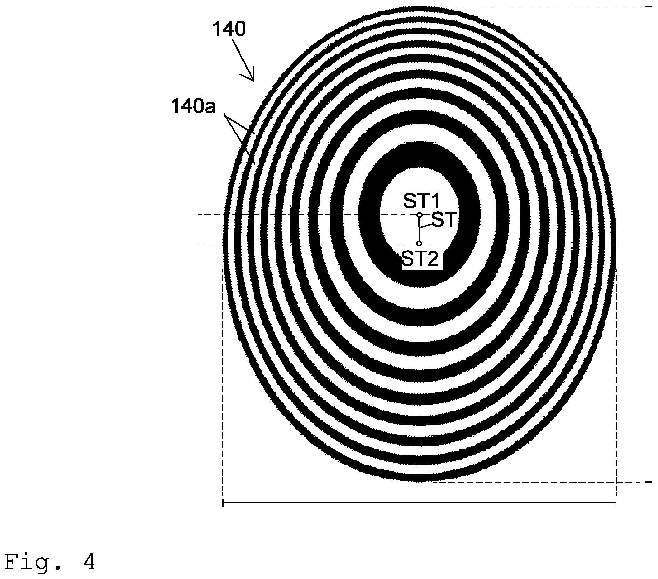

Die Figur 4 zeigt ein Ausführungsbeispiel für die Linse 140 in einer Draufsicht näher im Detail. Die Linse 140 weist erhabene Ringe 140a auf, die durch Stufen in der Materialschicht 124 (vgl. Figuren 2 und 3) ausgebildet sind. Die Ringe 140a weisen unterschiedliche Größen auf, wobei jeder Ring jeweils alle kleineren Ringe in seinem Ringinneren einschließt. Die Linse 140 hat somit gewisse Ähnlichkeit zu einer Fresnel-Linse.

Im Unterschied zu einer klassischen Fresnel-Linse sind die Ringe 140a elliptisch und nicht kreisrund, auch nicht konzentrisch zueinander angeordnet. So lässt die Figur 4 erkennen, dass die Ellipsenmitten der elliptischen Ringe 140a auf einer Strecke ST liegen, die - in der Draufsicht gemäß Figur 4 - parallel zur Längsachse des Wellenleiters 130 (vgl. Figuren 2 und 3) liegt. Ein Streckenende ST1 der Strecke ST wird durch die Ellipsenmitte des kleinsten Ringes der Linse 140 gebildet; das andere Streckenende ST2 der Strecke ST wird durch die Ellipsenmitte des größten Ringes gebildet.

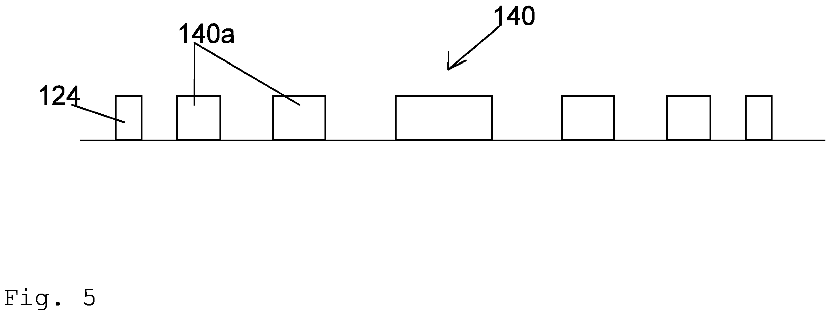

Die Figur 5 zeigt in einem Querschnitt die Ausbildung der Ringe 140a durch Stufen in der Materialschicht 124 näher im Detail.

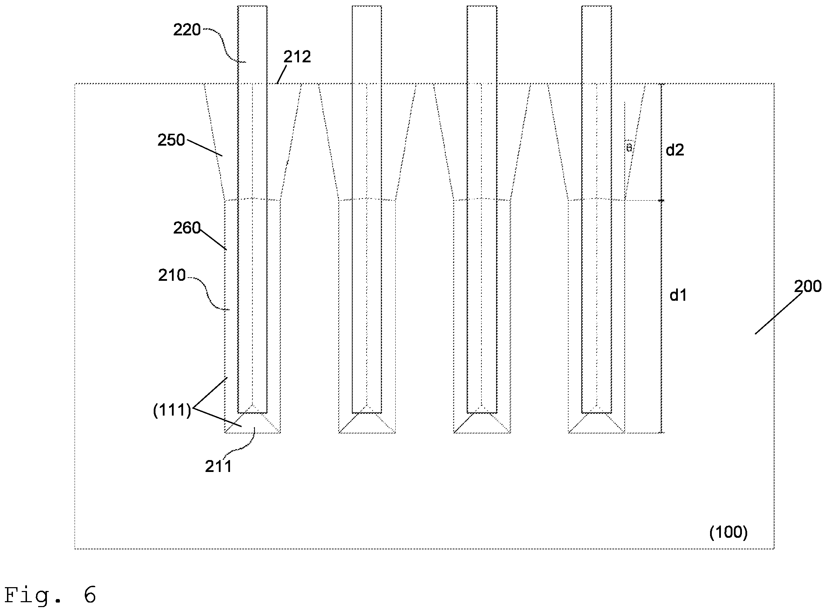

Die Figur 6 zeigt in einer Draufsicht die Faserhalterung 200 gemäß den Figuren 1 und 2 näher im Detail. Es lassen sich die Nuten 210 erkennen, die jeweils einen Taperabschnitt 250 und einen Halteabschnitt 260 umfassen. Die Anordnung der Taperabschnitte 250 ist derart gewählt, dass diese zur Nutendöffnung 212 tiefer und breiter werden, um ein Einschieben der Fasern 220 in die jeweilige Nut 210 zu vereinfachen. Die Länge d2 des Taperabschnitts 250 beträgt vorzugsweise mindestens 0,5 Millimeter; der Öffnungswinkel **θ** liegt vorzugsweise zwischen 1° und 45°.

Der Halteabschnitt 260 bildet die Nutendfläche 211 der Nut 210, gegen die die Faser 220 anstößt. Die Länge d1 des Halteabschnitts 260 beträgt vorzugsweise mindestens 1 Millimeter.

Als vorteilhaft wird es angesehen, wenn die Faserhalterung 200 ein Substrat aus Silizium aufweist bzw. daraus besteht. Handelt es sich um Siliziummaterial mit einer (100)-Kristallorientierung der Oberfläche, so lassen sich V-förmige Nuten bzw. V-Nuten anisotrop beispielsweise mit KOH ätzen. Die Nutwände und die Nutendfläche 211 werden in diesem Falle durch (111)-Kristallebenen des Siliziums gebildet.

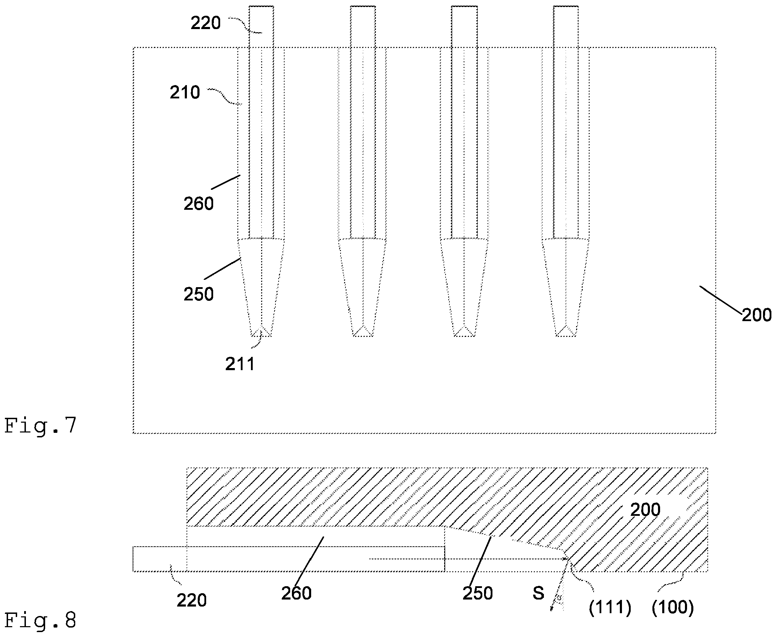

Die Figur 7 zeigt ein zweites Ausführungsbeispiel für eine Faserhalterung 200, die bei dem Bauelement 1 gemäß Figur 1 eingesetzt werden kann. Im Unterschied zu dem Ausführungsbeispiel gemäß den Figuren 1, 2 und 6 steht bei dem Ausführungsbeispiel gemäß Figur 7 der Halteabschnitt 260 mit der Nutendöffnung 212 in Verbindung, und der Taperabschnitt 250 bildet die Nutendfläche 211 bzw. die Spiegelfläche 230.

Die Ausrichtung des Taperabschnitts 250 ist derart gewählt, dass die Nut 210 von der Nutendfläche 211 in Richtung zur Nutendöffnung 212 bzw. in Richtung zum Halteabschnitt 260 breiter und tiefer wird, wobei sich der Taperabschnitt 250 an der Schnittstelle zum Halteabschnitt 260 an diesen vorzugsweise stufen- oder sprungfrei anschließt.

Durch das Verjüngen des Taperabschnitts 250 in Richtung zur Nutendfläche 211 kann erreicht werden, dass die Seitenwände des Taperabschnitts 250 für die Faser 220 einen Anschlag bilden, der einen Abstand zur Nutendfläche 211 aufweist. Mit anderen Worten kann erreicht werden, dass das Faserende der Faser 220 nicht gegen die Nutendfläche 211 bzw. die Spiegelfläche 230 stößt, wie dies beispielsweise bei der Variante gemäß Figur 2 und 6 der Fall ist.

Die Figur 8 zeigt die Faserhalterung 200 gemäß Figur 7 im Querschnitt. Es lässt sich erkennen, dass der Taperabschnitt 250 in Richtung zur Nutendfläche 211 nicht nur schmaler, sondern auch flacher wird. Die Nutendfläche 211 der Nut 210 wird vorzugsweise durch eine (111)-Kristallfläche des Substrats gebildet.

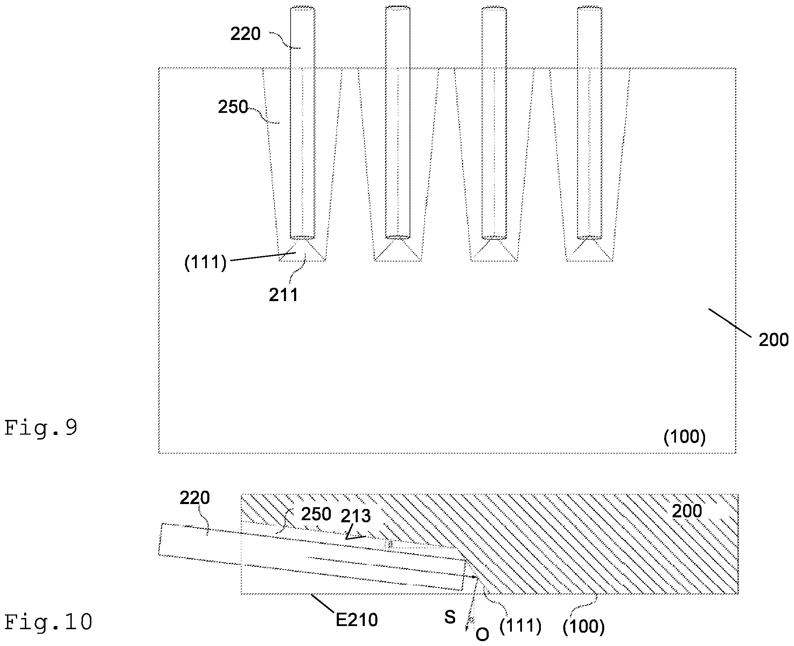

Die Figur 9 zeigt ein Ausführungsbeispiel für eine Faserhalterung 200, bei der die Nuten 210 ausschließlich taperförmig sind bzw. allein durch einen Taperabschnitt 250 gebildet sind. Die Taperabschnitte 250 werden ausgehend von der Nutendfläche 211 der Nuten 210 in Richtung zur Nutendöffnung 212 breiter und tiefer.

Die Figur 10 zeigt die Faserhalterung 200 gemäß Figur 9 in einem Querschnitt. Es lässt sich erkennen, dass der Nutboden 213 der Nut 210 aufgrund des Aufweitens in Richtung der Nutendöffnung 212 nicht mehr parallel zur Ebene E210 der oberen Nutöffnungsfläche liegt, sondern einen Winkel **β** zu dieser aufweist. Da die Faser 220 parallel zum Nutboden 213 liegt, weist auch die Längsachse der Faser 220 den Winkel **β** zur Ebene E210 auf. Der Winkel **β** verändert den Winkel zwischen der Längsachse der Faser 220 und der Spiegelfläche 230, wodurch auch der Winkel **α** zwischen der Ausbreitungsrichtung der Strahlung S und der Oberflächennormalen O verändert wird.

Bei dem Ausführungsbeispiel gemäß den Figuren 9 und 10 wird also durch das Tieferwerden der Nuten erreicht, dass die Fasern winklig in den Nuten liegen; der Winkel **β** verändert den Winkel **α** zwischen der Faser 220 und der Spiegelfläche 230 sowie damit auch den Eintrittswinkel der Strahlung S in den darunter befindlichen Chip.

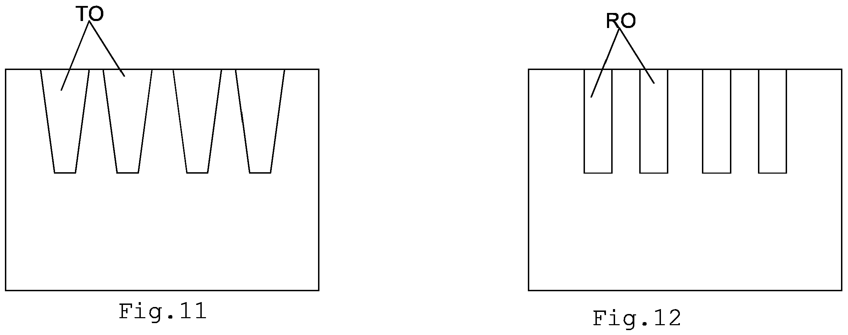

Die in den Figuren 9 und 10 gezeigten getaperten Nuten 210 lassen sich bei Verwendung von Siliziumwafern mit einer (100)-Kristallorientierung dadurch erreichen, dass Löcher unter Verwendung einer Maske mit trapezförmigen Maskenöffnungslöchern TO in den Kristall hinein geätzt werden. Die Figur 11 zeigt ein Ausführungsbeispiel für eine geeignete Maskenstruktur.

Alternativ (oder auch zusätzlich) ist es möglich, für das Substrat der Faserhalterung 200 ein Off-Axis-Wafermaterial einzusetzen, also ein Wafermaterial, bei dem die Oberfläche des Siliziumsubstrats einen Fehlwinkel von vorzugsweise zwischen 0,1° und 9,5° zur (100)-Kristallebene aufweist. In einem solchen Fall lassen sich getaperte Nuten auch unter Verwendung einer Ätzmaske herstellen, die rechteckförmige Maskenöffnungslöcher RO aufweist, wie dies beispielhaft in der Figur 12 gezeigt ist. Die Taperung bzw. die laterale und vertikale Aufweiterung der Nuten 210 ergibt sich in diesem Falle durch den Fehlwinkel der Kristallorientierung, sofern die Nuten mit einem anisotropen, also einem kristallrichtungsabhängigen Ätzmittel geätzt werden.

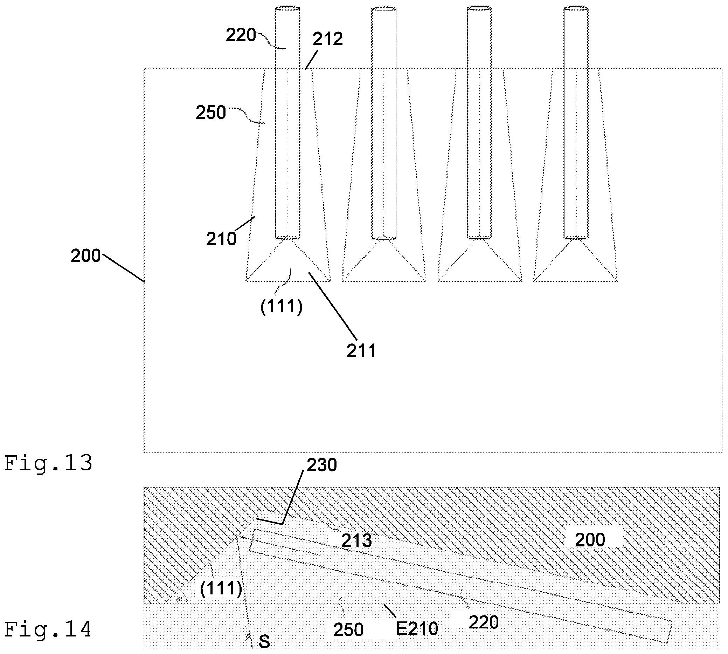

Die Figur 13 zeigt ein Ausführungsbeispiel für eine Faserhalterung 200, bei der die Nuten 210 jeweils durchgängig getapert sind bzw. allein durch einen Taperabschnitt 250 gebildet sind. Die Ausrichtung des Taperabschnitts 250 ist bei dem Ausführungsbeispiel gemäß Figur 13 invers zu der Ausrichtung bei dem Ausführungsbeispiel gemäß Figur 9. So lässt sich erkennen, dass die Nuten 210 ausgehend von der Nutendöffnung 212 in Richtung zur Nutendfläche 211 breiter und tiefer werden, wodurch es zu einem Verkippen der Fasern 220 innerhalb der Nuten 210 kommt, wie dies im Zusammenhang mit den Figuren 9 und 10 bereits erläutert wurde. Wegen der inversen Ausrichtung der Taperung liegt das der Spiegelfläche 230 zugewandte Faserende der Faser 220 jedoch tiefer (vgl. Figur 14) als im Bereich der Nutendöffnung 212, wodurch der Winkel zwischen der Längsachse der Faser 220 und der Spiegelebene der Spiegelfläche 230 vergrößert und nicht - wie bei dem Ausführungsbeispiel gemäß den Figuren 9 und 10 - verkleinert wird. Mit anderen Worten ist es also möglich, den Einfallswinkel der Strahlung auf der Spiegelfläche 230 mittels der Taperung gezielt einzustellen, wobei wahlweise eine Vergrößerung oder Verkleinerung des Einfallswinkels möglich ist.

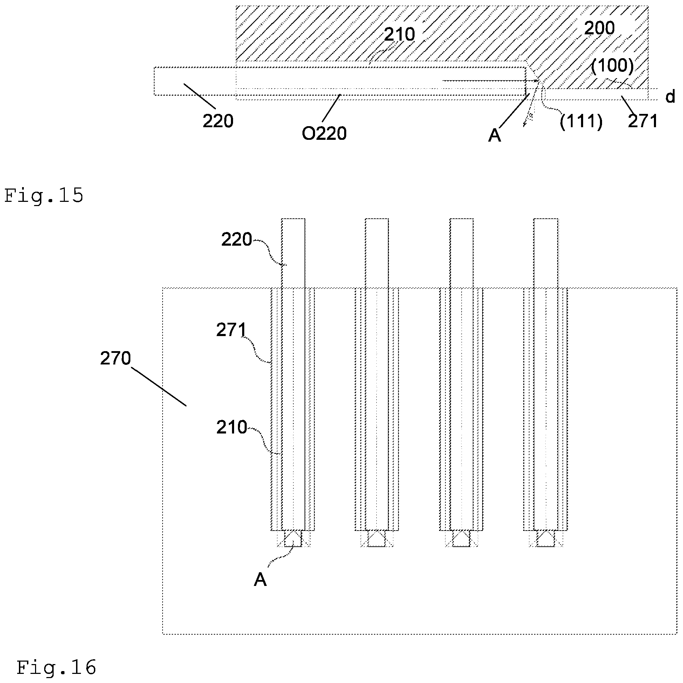

Die Figur 15 zeigt ein Ausführungsbeispiel für eine Faserhalterung 200, die ein Substrat 270 sowie eine auf dem Substrat 270 befindliche Abstandshalterschicht 271 umfasst. Die Dicke d der Abstandshalterschicht 271 kann beispielsweise zwischen 2 und 25 µm betragen, vorzugsweise ist die Dicke so groß gewählt, dass die Abstandshalterschicht 271 die Fasern 220 überragt. Die Oberkante O220 der Fasern 220 liegt also vorzugsweise - bei Draufsicht auf die Abstandshalterschicht 271 - unterhalb der Oberseite der Abstandshalterschicht 271.

Die Abstandshalterschicht 271 überragt vorzugsweise auch einen Abschnitt der Nut 210, insbesondere den Bereich der Nutendfläche 211 der Nut 210 oder einen der Nutendfläche 211 vorgelagerten Abschnitt, wodurch ein Anschlag A für die Faser 220 gebildet wird. Der Anschlag A bzw. die Abstandshalterschicht 271 ermöglicht somit eine definierte Positionierung der Endfläche der Faser 220 mit einem vorgegebenen Abstand vor der Nutendfläche 211.

Die Figur 16 zeigt die Faserhalterung 200 gemäß Figur 15 nochmals in einer Draufsicht. Es lässt sich erkennen, dass durch die Abstandshalterschicht 271 ein Anschlag A für die Endfläche der Faser 220 geschaffen wird.

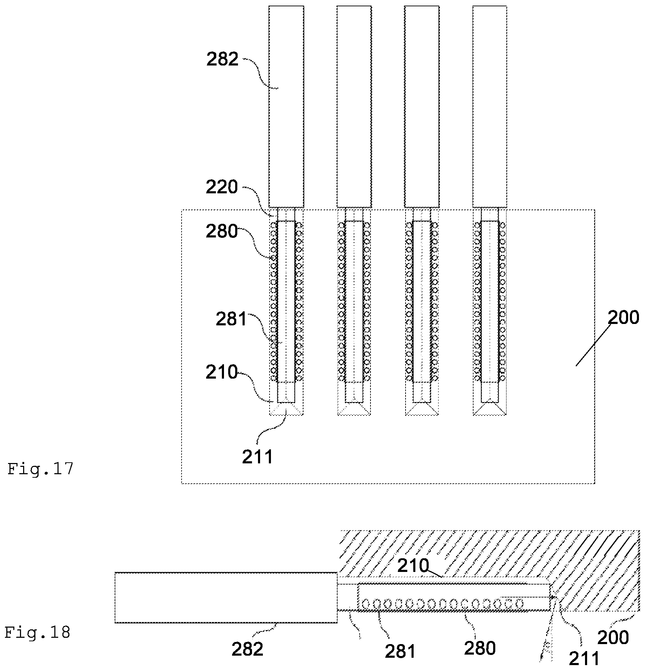

Die Figur 17 zeigt ein Ausführungsbeispiel für eine Faserhalterung 200, bei der die Fasern 220 in den Nuten 210 eingelötet sind. Mit einer Lötverbindung lässt sich in vorteilhafter Weise eine höhere Flexibilität hinsichtlich nachgeschalteter Prozessschritte, wie beispielsweise beim Löten des Substrats auf den Chip, erreichen als mit Klebeverbindungen.

Das Lot für die Lotverbindung zwischen Faser 220 und Nut 210 kann beispielsweise in Form von Lotkugeln 280 oder durch galvanische Abscheidung aufgebracht werden, sei es auf den Nutwänden der Nuten 210 und/oder auf der Oberfläche der Fasern 220.

Für eine gute Lötverbindung ist es vorteilhaft, wenn die Fasern 220 vor dem Löten mit einer Metallschicht 281 versehen werden.

Eine äußere Faserbeschichtung der Faser 210 im Bereich außerhalb der Faserhalterung 200 ist in der Figur 17 mit dem Bezugszeichen 282 gekennzeichnet.

Die Figur 18 zeigt die Faserhalterung 200 gemäß Figur 17 in einem Querschnitt. Man erkennt eine Faser 220 in der ihr zugeordneten Nut 210 vor dem Verlöten.

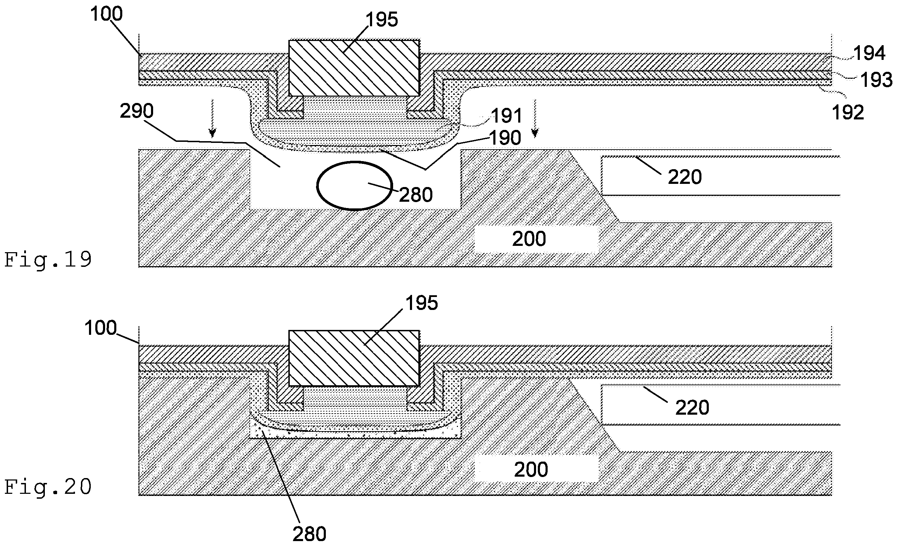

Die Figur 19 zeigt ein Ausführungsbeispiel für eine Faserhalterung 200, die mit einer konkaven Befestigungsausnehmung 290 ausgestattet ist. In die Befestigungsausnehmung 290 wird im Rahmen des Zusammensetzens von Faserhalterung 200 und Chip 100 ein konvexer Befestigungsabschnitt 190 des Chips 100 eingesetzt. Der konvexe Befestigungsabschnitt 190 des Chips 100 kann in der konkaven Befestigungsausnehmung 290 beispielsweise eingelötet werden, wie dies durch eine Lotkugel 280 in Figur 19 angedeutet ist.

Der konvexe Befestigungsabschnitt 190 des Chips 100 kann einen Metallkern 191, insbesondere einen Nickelkern, aufweisen, der mit einer Goldschicht 192 beschichtet ist. Der Metallkern 191 kann sich durch eine Öffnung in einer darüber befindlichen Nitridschicht 193 und/oder Siliziumoxidschicht 194 zu einer Kontaktstelle 195 des Chips 100 erstrecken. Der Metallkern 191 kann somit beispielsweise einen Bestandteil einer elektrischen Kontaktierung bilden.

Durch das Ineinandergreifen von Faserhalterung 200 und Chip 100 lässt sich in vorteilhafter Weise erreichen, dass die Oberflächen der beiden Teile nach der Montage direkt ganzflächig aufeinander liegen können, wie dies in der Figur 20 erkennbar ist. Die Fasern 220 sind bei dieser Ausführungsform vorzugsweise vollständig in der Faserhalterung 200 versenkt bzw. werden vorzugsweise vollständig in dieser aufgenommen. Das Lotmaterial der Lotkugel 280 wird durch das Einsetzen des konvexen Befestigungsabschnitts 190 innerhalb der konkaven Befestigungsausnehmung 290 gleichmäßig verteilt, wodurch automatisch bzw. ohne weitere Maßnahmen eine sehr stabile Verbindung erreicht wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden.

### Bezugszeichenliste

- 1: Bauelement
- 2: Leiterplatte
- 100: Chip
- 110: Substrat
- 120: Schichtpaket
- 120a: Durchgangsloch
- 122: Siliziumschicht
- 123: Schicht
- 124: oberste Materialschicht
- 130: optischer Wellenleiter
- 135: Gitterkoppler
- 140: Linse
- 140a: Ring
- 145: Photodetektor
- 190: konvexer Befestigungsabschnitt
- 191: Metallkern
- 192: Goldschicht
- 193: Nitridschicht
- 194: Siliziumoxidschicht
- 195: Kontaktstelle
- 200: Faserhalterung
- 210: Nut
- 211: Nutendfläche
- 212: Nutendöffnung
- 213: Nutboden
- 220: Faser
- 230: Spiegelfläche
- 240: Durchgangsloch
- 250: Taperabschnitt
- 260: Halteabschnitt
- 270: Substrat
- 271: Abstandshalterschicht
- 280: Lotkugel
- 281: Metallschicht
- 282: äußere Faserbeschichtung
- 290: konkave Befestigungsausnehmung
- 300: Laser
- 400: Kühlkörper
- 500: Ausrichteinheit
- 510: Kontrolleinheit

- A: Anschlag
- d: Dicke
- d1: Länge des Halteabschnitts
- d2: Länge des Taperabschnitts
- E210: Ebene
- O: Flächennormale
- O220: Oberkante
- RO: rechteckförmiges Maskenöffnungsloch
- S: Strahlung
- ST: Strecke
- ST1: Streckenende
- ST2: Streckenende
- TO: trapezförmiges Maskenöffnungsloch
- **α**: Winkel
- **β**: Winkel
- **θ**: Öffnungswinkel

## Patentansprüche

1. Photonisches Bauelement (1) mit einem photonisch integrierten Chip (100) und einer mit dem Chip (100) mechanisch verbundenen Faserhalterung (200), wobei die Faserhalterung (200) aufweist:
- zumindest eine Nut (210), in die eine optische Faser (220) eingelegt ist, und
- zumindest eine Spiegelfläche (230), die Strahlung (S) der Faser (220) in Richtung des Chips (100) und/oder Strahlung (S) des Chips (100) in Richtung der Faser (220) spiegelt, wobei
- der Chip (100) aufweist:
- ein Substrat (110), dessen Substratgrundmaterial ein Halbleitermaterial ist,
- einen integrierten optischen Wellenleiter (130), der in einer oder mehreren auf dem Substrat (110) befindlichen wellenführenden Materialschichten (122) des Chips (100) integriert ist, und
- einen in dem optischen Wellenleiter (130) ausgebildeten oder mit dem optischen Wellenleiter (130) in Verbindung stehenden Koppler, insbesondere Gitterkoppler (135), und
- die zumindest eine Nut (210) in ein Substrat (270) der Faserhalterung (200) eingebracht ist, dessen Substratgrundmaterial dem Substratgrundmaterial des Chips (100) entspricht, **dadurch gekennzeichnet, dass**
- der Chip (100) eine optische Beugungs- und Brechungsstruktur (140) aufweist, die in einer oder mehreren - vom Substrat (110) aus gesehen - oberhalb des optischen Kopplers befindlichen Materialschichten (124) des Chips (100) integriert ist und eine Strahlformung der Strahlung (S) vor Einkopplung in den Wellenleiter (130) oder nach dem Auskoppeln aus dem Wellenleiter (130) vornimmt,
- der Chip (100) derart mit der Faserhalterung (200) verbunden ist, dass die optische Beugungs- und Brechungsstruktur im Strahlweg zwischen dem Koppler und der Spiegelfläche (230) liegt, und
- die optische Beugungs- und Brechungsstruktur (140) erhabene Ringe (140a) aufweist, die jeweils in einer oder mehreren oberhalb des optischen Gitterkopplers (135) befindlichen Materialschichten (124) des Chips (100) ausgebildet sind,
- wobei die Ringe (140a) unterschiedliche Größen aufweisen und jeder Ring (140a) jeweils alle kleineren Ringe (140a) in seinem Ringinneren einschließt,
- wobei die Ringe (140a) jeweils elliptisch sind und nichtkonzentrisch zueinander angeordnet sind und
- wobei die Ellipsenmitten der elliptischen Ringe (140a) auf einer Strecke (ST) liegen, die - in der Draufsicht betrachtet - über dem integrierten optischen Wellenleiter (130) liegt und parallel zu dessen Längsachse verläuft und deren eines Streckenende (ST1) durch die Ellipsenmitte des kleinsten Ringes und deren anderes Streckenende (ST2) durch die Ellipsenmitte des größten Ringes gebildet ist.

2. Bauelement (1) nach Anspruch 1,
**dadurch gekennzeichnet, dass**
- eine Nutendfläche (211) der Nut (210) oder eine auf der Nutendfläche (211) aufgebrachte Schicht die Spiegelfläche (230) bildet, die Strahlung (S) der Faser (220) in Richtung des Chips (100) und/oder Strahlung (S) des Chips (100) in Richtung der Faser (220) spiegelt, und
- die optische Beugungs- und Brechungsstruktur im Strahlweg zwischen dem Koppler und der Nutendfläche (211) liegt.

3. Bauelement (1) nach einem der voranstehenden Ansprüche,
**dadurch gekennzeichnet, dass**
- der integrierte optische Wellenleiter (130) und die Faser (220) zumindest im Bereich des Kopplers übereinander angeordnet und dort parallel zueinander ausgerichtet sind,
- die Spiegelfläche (230) von der Faser (220) kommende Strahlung (S) in Richtung des Chips (100) mit zwei Richtungskomponenten spiegelt, von denen eine senkrecht zur Ausbreitungsrichtung der Strahlung (S) in der Faser (220) und die andere entgegengesetzt zur Ausbreitungsrichtung der Strahlung (S) in der Faser (220) ist und
- sich die durch den Koppler in den optischen Wellenleiter (130) gekoppelte Strahlung (S) entgegengesetzt zur Ausbreitungsrichtung der Strahlung (S) in der Faser (220) ausbreitet.

4. Bauelement (1) nach einem der voranstehenden Ansprüche,
**dadurch gekennzeichnet, dass**
- die Beugungs- und Brechungsstruktur in einer Ebene parallel zu der wellenführenden Materialschicht bzw. den wellenführenden Materialschichten liegt, und
- die Beugungs- und Brechungsstruktur zweidimensional ortsabhängig ist, und zwar in einer Dimension abhängig vom Ort entlang der Längsrichtung des Wellenleiters (130) und in einer dazu senkrechten Dimension abhängig vom Ort senkrecht zur Längsrichtung des Wellenleiters (130).

5. Bauelement (1) nach einem der voranstehenden Ansprüche,
**dadurch gekennzeichnet, dass**
die Nut (210) einen sich lateral aufweitenden und vertikal vertiefenden Abschnitt, nachfolgend Taperabschnitt (250) genannt, aufweist.

6. Bauelement (1) nach Anspruch 5,
**dadurch gekennzeichnet, dass**
- sich der Taperabschnitt (250) bis zur Nutendfläche (211) erstreckt und - in Richtung von der Nutendfläche (211) weg
- breiter und tiefer wird und
- durch das Tieferwerden der Nut (210) die Längsrichtung der Faser (220) und die Ebene der oberen Nutöffnungsfläche (250) in einem Winkel zwischen 0,1° und 40° zueinander stehen oder zumindest nicht parallel zueinander sind.

7. Bauelement (1) nach Anspruch 6,
**dadurch gekennzeichnet, dass**
- der Öffnungswinkel des Taperabschnitts (250) vorzugsweise in einem Bereich zwischen 0,1° und 11° liegt, und/oder
- durch das Tieferwerden der Nut (210) die Ebene der Spiegelfläche (230) einen Winkel zwischen 39,4° und 54,6° zur Längsachse der Faser (220) aufweist und dadurch erreicht wird, dass die Spiegelfläche (230) von der Faser (220) kommende Strahlung (S) in Richtung des Chips (100) mit einer Richtungskomponenten spiegelt, die entgegengesetzt zur Ausbreitungsrichtung der Strahlung (S) in der Faser (220) ist und sich die durch den Koppler in den optischen Wellenleiter (130) gekoppelte Strahlung (S) entgegengesetzt zur Ausbreitungsrichtung der Strahlung (S) in der Faser (220) ausbreitet.

8. Bauelement (1) nach einem der voranstehenden Ansprüche 6 bis 7,
**dadurch gekennzeichnet, dass**
- die Nut (210) einen - von der Nutendfläche (211) aus gesehen - hinter dem Taperabschnitt (250) angeordneten Halteabschnitt (260) aufweist, dessen Nutbreite und Nuttiefe konstant ist, und
- die Faser (220) in dem Halteabschnitt (260) liegt und der Taperabschnitt (250) - in Längsrichtung der Faser (220) gesehen - für die Faser (220) einen Anschlag (A) bildet, der von der Nutendfläche (211) beabstandet ist.

9. Bauelement (1) nach Anspruch 5,
**dadurch gekennzeichnet, dass**
- die Nut (210) einen vor der Nutendfläche (211) angeordneten Halteabschnitt (260) aufweist, dessen Nutbreite und Nuttiefe konstant ist, und
- der Taperabschnitt (250) den Halteabschnitt (260) mit einer Nutendöffnung verbindet, die an dem von der Nutendfläche (211) entfernten Ende der Nut (210) angeordnet ist und durch die die Faser (220) aus der Nut (210) heraus nach außen geführt ist.

10. Bauelement (1) nach Anspruch 5,
**dadurch gekennzeichnet, dass**
- sich der Taperabschnitt (250) bis zur Nutendfläche (211) erstreckt und - in Richtung von der Nutendfläche (211) weg - schmaler und flacher wird und
- durch das Flacherwerden der Nut (210) die Längsrichtung der Faser (220) und die Ebene der oberen Nutöffnungsfläche (250) in einem Winkel zwischen 0,1° und 10,5° zueinander stehen oder zumindest nicht parallel zueinander sind.

11. Bauelement (1) nach einem der voranstehenden Ansprüche,
**dadurch gekennzeichnet, dass**
- die Faserhalterung (200) als das oben genannte Substrat (110) ein Siliziumsubstrat umfasst und die Nut (210) eine in das Siliziumsubstrat geätzte, im Querschnitt V-förmige Nut (210) ist und
- die Nutwände der Nut (210) und/oder die Nutendfläche (211) durch eine (111)-Kristallebene oder eine dazu äquivalente bzw. eine aus Symmetriegründen dazu als gleichwertig anzusehende Kristallebene, insbesondere die (1-1-1)-Kristallebene des Siliziumsubstrats, gebildet sind.

12. Bauelement (1) nach einem der voranstehenden Ansprüche,
**dadurch gekennzeichnet, dass**
- die Oberfläche des Substrats der Faserhalterung (200) durch eine (100)-Kristallebene gebildet ist und
- die Ebene der oberen Nutöffnungsfläche (E210) parallel zur (100)-Kristallebene des Substrats liegt.

13. Bauelement (1) nach einem der voranstehenden Ansprüche 11 bis 12,
**dadurch gekennzeichnet, dass**
der Winkel zwischen der Oberfläche des Substrats der Faserhalterung (200) und der (100)-Kristallebene des Substrats der Faserhalterung (200) zwischen 0,1° und 9,5° liegt.

14. Bauelement (1) nach einem der voranstehenden Ansprüche,
**dadurch gekennzeichnet, dass**
- das Substrat der Faserhalterung (200) mit einer Abstandshalterschicht (271), insbesondere einer Siliziumdioxidschicht, beschichtet ist,
- wobei die in die Nut (210) eingelegte Faser (220) mit der Abstandshalterschicht (271) höhenmäßig abschließt oder von dieser überragt wird und/oder die Abstandshalterschicht (271) - in Längsrichtung der Faser (220) gesehen - einen Anschlag (A) für die Faser (220) bildet.

15. Bauelement (1) nach einem der voranstehenden Ansprüche,
**dadurch gekennzeichnet, dass**
das Substrat (110), insbesondere Siliziumsubstrat, der Faserhalterung (200) mindestens eine konkave Befestigungsausnehmung (290) aufweist, in die ein zugeordneter konvexer Befestigungsabschnitt (190) des Chips (100) eingreift.

## Claims

1. Photonic component (1) comprising a photonic integrated chip (100) and a fibre mount (200), which is mechanically connected to the chip (100), wherein the fibre mount (200) has:
- at least one groove (210) into which an optical fibre (220) is inserted, and
- at least one mirror surface (230) which specularly reflects radiation (S) of the fibre (220) in the direction of the chip (100) and/or radiation (S) of the chip (100) in the direction of the fibre (220),
wherein
- the chip (100) has:
- a substrate (110), the substrate base material of which is a semiconductor material,
- an integrated optical waveguide (130), which is integrated in one or more waveguiding material layers (122) of the chip (100), said one or more layers being situated on the substrate (110), and
- a coupler, in particular grating coupler (135), which is embodied in the optical waveguide (130) or is connected to the optical waveguide (130), and
- the at least one groove (210) is introduced into a substrate (270) of the fibre mount (200), the substrate base material of said substrate corresponding to the substrate base material of the chip (100),
**characterized in that**
- the chip (100) has an optical diffraction and refraction structure (140), which is integrated in one or more material layers (124) of the chip (100), said one or more material layers being situated - as viewed from the substrate (110) - above the optical coupler, and carries out beam shaping of the radiation (S) prior to coupling into the waveguide (130) or after coupling out of the waveguide (130),
- the chip (100) is connected to the fibre mount (200) in such a way that the optical diffraction and refraction structure is located in the beam path between the coupler and the mirror surface (230), and
- the optical diffraction and refraction structure (140) has elevated rings (140a) embodied in each case in one or more material layers (124) of the chip (100), said one or more material layers being situated above the optical grating coupler (135),
- wherein the rings (140a) have different sizes and each ring (140a) encloses in each case all smaller rings (140a) in its ring interior,
- wherein the rings (140a) are each elliptical and are arranged non-concentrically with respect to one another, and
- wherein the ellipse centres of the elliptical rings (140a) are located on a section (ST) which is located - viewed in plan view - above the integrated optical waveguide (130) and extends parallel to the longitudinal axis thereof and one section end (ST1) of which is formed by the ellipse centre of the smallest ring and the other section end (ST2) of which is formed by the ellipse centre of the largest ring.

2. Component (1) according to Claim 1,
**characterized in that**
- a groove end face (211) of the groove (210) or a layer applied on the groove end face (211) forms the mirror surface (230) that specularly reflects radiation (S) of the fibre (220) in the direction of the chip (100) and/or radiation (S) of the chip (100) in the direction of the fibre (220) and
- the optical diffraction and refraction structure is located in the beam path between the coupler and the groove end face (211).

3. Component (1) according to one of the preceding claims,
**characterized in that**
- the integrated optical waveguide (130) and fibre (220) are arranged one above the other at least in the region of the coupler and are aligned parallel to one another there,
- the mirror surface (230) specularly reflects radiation (S) coming from the fibre (220) in the direction of the chip (100) with two directional components, one of which is perpendicular to the direction of propagation of the radiation (S) in the fibre (220) and the other of which is opposite to the direction of propagation of the radiation (S) in the fibre (220), and
- the radiation (S) that is coupled into the optical waveguide (130) by the coupler propagates opposite to the direction of propagation of the radiation (S) in the fibre (220).

4. Component (1) according to any of the preceding claims,
**characterized in that**
- the diffraction and refraction structure is located in a plane parallel to the waveguiding material layer or the waveguiding material layers, and
- the diffraction and refraction structure is two-dimensionally location-dependent, specifically dependent on the location along the longitudinal direction of the waveguide (130) in one dimension and, in a dimension perpendicular thereto, dependent on location perpendicular to the longitudinal direction of the waveguide (130).

5. Component (1) according to any of the preceding claims,
**characterized in that**
the groove (210) has a laterally widening and vertically deepening portion, referred to hereinafter as taper portion (250).

6. Component (1) according to Claim 5,
**characterized in that**
- the taper portion (250) extends as far as the groove end face (211) and - in a direction away from the groove end face (211) - becomes wider and deeper, and
- as a result of the groove (210) becoming deeper, the longitudinal direction of the fibre (220) and the plane of the upper groove opening surface (250) are at an angle of between 0.1° and 40° with respect to one another or are at least not parallel to one another.

7. Component (1) according to Claim 6,
**characterized in that**
- the opening angle of the taper portion (250) is preferably in a range of between 0.1° and 11°, and/or
- as a result of the groove (210) becoming deeper, the plane of the mirror surface (230) is at an angle between 39.4° and 54.6° with respect to the longitudinal axis of the fibre (220) and what is achieved as a result is that the mirror surface (230) specularly reflects radiation (S) coming from the fibre (220) in the direction of the chip (100) with a directional component that is opposite to the direction of propagation of the radiation (S) in the fibre (220), and the radiation (S) that is coupled into the optical waveguide (130) by the coupler propagates opposite to the direction of propagation of the radiation (S) in the fibre (220).

8. Component (1) according to either of the preceding Claims 6 and 7,
**characterized in that**
- the groove (210) has a holding portion (260) arranged - as viewed from the groove end face (211) - behind the taper portion (250), the groove width and groove depth of which holding portion are constant, and
- the fibre (220) is located in the holding portion (260) and the taper portion (250) - viewed in the longitudinal direction of the fibre (220) - forms for the fibre (220) a stop (A) that is at a distance from the groove end face (211).

9. Component (1) according to Claim 5,
**characterized in that**
- the groove (210) has a holding portion (260) arranged upstream of the groove end face (211), the groove width and groove depth of which holding portion are constant, and
- the taper portion (250) connects the holding portion (260) to a groove end opening which is arranged at the end of the groove (210) remote from the groove end face (211) and through which the fibre (220) is guided out of the groove (210) to the outside.

10. Component (1) according to Claim 5,
**characterized in that**
- the taper portion (250) extends as far as the groove end face (211) and - in a direction away from the groove end face (211) - becomes narrower and flatter, and
- as a result of the groove (210) becoming flatter, the longitudinal direction of the fibre (220) and the plane of the upper groove opening surface (250) are at an angle of between 0.1° and 10.5° with respect to one another or are at least not parallel to one another.

11. Component (1) according to any of the preceding claims,
**characterized in that**
- the fibre mount (200) comprises a silicon substrate as the substrate (110) mentioned above, and the groove (210) is a groove that is etched into the silicon substrate and is V-shaped in cross section, and
- the groove walls of the groove (210) and/or the groove end face (211) are/is formed by a (111) crystal plane or a crystal plane that is equivalent thereto or should be regarded as equivalent thereto for symmetry reasons, in particular (1-1-1) crystal plane of the silicon substrate.

12. Component (1) according to any of the preceding claims,
**characterized in that**
- the surface of the substrate of the fibre mount (200) is formed by a (100) crystal plane, and
- the plane of the upper groove opening surface (E210) is parallel to the (100) crystal plane of the substrate.

13. Component (1) according to either of the preceding Claims 11 and 12,
**characterized in that**
the angle between the surface of the substrate of the fibre mount (200) and the (100) crystal plane of the substrate of the fibre mount (200) is between 0.1° and 9.5°.

14. Component (1) according to any of the preceding claims,
**characterized in that**
- the substrate of the fibre mount (200) is coated with a spacer layer (271), in particular a silicon dioxide layer,
- wherein the fibre (220) that has been inserted into the groove (210) terminates with the spacer layer (271) in terms of height or the spacer layer projects beyond said fibre, and/or the spacer layer (271) - viewed in the longitudinal direction of the fibre (220) forms a stop (A) for the fibre (220).

15. Component (1) according to any of the preceding claims,
**characterized in that**
the substrate (110), in particular silicon substrate, of the fibre mount (200) has at least one concave securing recess (290) in which an assigned convex securing portion (190) of the chip (100) engages.

## Revendications

1. Composant photonique (1) comprenant une puce (100) intégrée photoniquement et une attache de fibre (200) reliée mécaniquement à la puce (100), l'attache de fibre (200) possédant :
- au moins une rainure (210) dans laquelle est insérée une fibre optique (220), et
- au moins une surface réfléchissante (230) qui réfléchit le rayonnement (S) de la fibre (220) en direction de la puce (100) et/ou le rayonnement (S) de la puce (100) en direction de la fibre (220),
- la puce (100) possédant :
- un substrat (110) dont le matériau de base de substrat est un matériau semiconducteur,
- un guide d'ondes optique (130) intégré, qui est intégré dans une ou plusieurs couches de matériau (122) de la puce (100) qui guident les ondes et se trouvent sur le substrat (110), et
- un coupleur, notamment un coupleur à réseau (135), formé dans le guide d'ondes optique (130) ou se trouvant en liaison avec le guide d'ondes optique (130), et
- l'au moins une rainure (210) étant incorporée dans un substrat (270) de l'attache de fibre (200) dont le matériau de base de substrat correspond au matériau de base de substrat de la puce (100),
**caractérisé en ce que**
- la puce (100) possède une structure optique de diffraction et de réfraction (140), qui est intégrée dans une ou plusieurs couches de matériau (124) de la puce (100) qui, vues depuis le substrat (110), se trouvent au-dessus du coupleur optique, et réalise une conformation de faisceau du rayonnement (S) avant l'injection dans le guide d'ondes (130) ou après la sortie hors du guide d'ondes (130),
- la puce (100) est reliée à l'attache de fibre (200) de telle sorte que la structure optique de diffraction et de réfraction se trouve dans le trajet du faisceau entre le coupleur et la surface réfléchissante (230), et
- la structure optique de diffraction et de réfraction (140) possède des anneaux (140a) en relief qui sont respectivement configurés dans une ou plusieurs couches de matériau (124) de la puce (100) qui se trouvent au-dessus du coupleur à réseau (135) optique,
- les anneaux (140a) possédant des tailles différentes et chaque anneau (140a) incluant respectivement tous les anneaux (140a) plus petits à l'intérieur de celui-ci,
- les anneaux (140a) étant respectivement elliptiques et étant disposés de manière non concentrique les uns par rapport aux autres et
- les centres d'ellipse des anneaux (140a) elliptiques se trouvant sur un parcours (ST) qui, vu de dessus, se trouve au-dessus du guide d'ondes optique (130) intégré et suit un tracé parallèle à son axe longitudinal et dont une extrémité de parcours (ST1) est formée par le centre d'ellipse de l'anneau le plus petit et dont l'autre extrémité de parcours (ST2) est formée par le centre d'ellipse de l'anneau le plus grand.

2. Composant (1) selon la revendication 1, **caractérisé en ce que**
- une surface d'extrémité de rainure (211) de la rainure (210) ou une couche appliquée sur la surface d'extrémité de rainure (211) forme la surface réfléchissante (230) qui réfléchit le rayonnement (S) de la fibre (220) en direction de la puce (100) et/ou le rayonnement (S) de la puce (100) en direction de la fibre (220), et
- la structure optique de diffraction et de réfraction se trouve dans le trajet du faisceau entre le coupleur et la surface d'extrémité de rainure (211).

3. Composant (1) selon l'une des revendications précédentes,
**caractérisé en ce que**
- le guide d'ondes optique (130) intégré et la fibre (220) sont disposés l'un au-dessus de l'autre au moins dans la zone du coupleur et y sont orientés parallèlement l'un à l'autre,
- la surface réfléchissante (230) réfléchit le rayonnement (S) en provenance de la fibre (220) en direction de la puce (100) avec deux composantes directionnelles dont l'une est perpendiculaire au sens de propagation du rayonnement (S) dans la fibre (220) et l'autre est à l'opposé du sens de propagation du rayonnement (S) dans la fibre (220) et
- le rayonnement (S) couplé par le coupleur dans le guide d'ondes optique (130) se propage à l'opposé du sens de propagation du rayonnement (S) dans la fibre (220) .

4. Composant (1) selon l'une des revendications précédentes,
**caractérisé en ce que**
- la structure de diffraction et de réfraction se trouve dans un plan parallèle à la couche de matériau guidant les ondes ou aux couches de matériau guidant les ondes, et
- la structure de diffraction et de réfraction est dépendante de l'emplacement en deux dimensions, à savoir dans une dimension dépendant de l'emplacement le long de la direction longitudinale du guide d'ondes (130) et dans une dimension perpendiculaire à celle-ci dépendant de l'emplacement perpendiculaire à la direction longitudinale du guide d'ondes (130).

5. Composant (1) selon l'une des revendications précédentes,
**caractérisé en ce que**
la rainure (210) possède une portion qui s'élargit latéralement et se creuse verticalement, appelée ci-après portion à raccord en queue de rat (250).

6. Composant (1) selon la revendication 5, **caractérisé en ce que**
- la portion à raccord en queue de rat (250) s'étend jusqu'à la surface d'extrémité de rainure (211) et devient plus large et plus profonde dans la direction à l'opposé de la surface d'extrémité de rainure (211) et
- du fait de l'augmentation de la profondeur de la rainure (210), la direction longitudinale de la fibre (220) et le plan de la surface d'ouverture de rainure supérieure (250) se trouvent à un angle entre 0,1° et 40° l'un par rapport à l'autre ou au moins ne sont pas parallèles l'un à l'autre.

7. Composant (1) selon la revendication 6, **caractérisé en ce que**
- l'angle d'ouverture de la portion à raccord en queue de rat (250) est de préférence compris dans une plage entre 0,1° et 11°, et/ou
- du fait de l'augmentation de la profondeur de la rainure (210), le plan de la surface réfléchissante (230) présente un angle entre 39,4° et 54,6° par rapport à l'axe longitudinal de la fibre (220) et, de ce fait, il est obtenu que la surface réfléchissante (230) réfléchit le rayonnement (S) en provenance de la fibre (220) en direction de la puce (100) avec une composante directionnelle qui est à l'opposé du sens de propagation du rayonnement (S) dans la fibre (220) et le rayonnement (S) couplé par le coupleur dans le guide d'ondes optique (130) se propage à l'opposé du sens de propagation du rayonnement (S) dans la fibre (220).

8. Composant (1) selon l'une des revendications précédentes 6 et 7,
**caractérisé en ce que**
- la rainure (210) possède une portion de maintien (260) qui, vue depuis la surface d'extrémité de rainure (211), est disposée derrière la portion à raccord en queue de rat (250) et dont la largeur de rainure et la profondeur de rainure sont constantes, et
- la fibre (220) se trouve dans la portion de maintien (260) et la portion à raccord en queue de rat (250), vue dans la direction longitudinale de la fibre (220), forme pour la fibre (220) une butée (A) qui est espacée de la surface d'extrémité de rainure (211).

9. Composant (1) selon la revendication 5,
**caractérisé en ce que**
- la rainure (210) possède une portion de maintien (260) disposée devant la surface d'extrémité de rainure (211) dont la largeur de rainure et la profondeur de rainure sont constantes, et
- la portion à raccord en queue de rat (250) relie la portion de maintien (260) avec une ouverture d'extrémité de rainure qui est disposée à l'extrémité de la rainure (210) éloignée de la surface d'extrémité de rainure (211) et à travers laquelle la fibre (220) est guidée hors de la rainure (210) vers l'extérieur.

10. Composant (1) selon la revendication 5,
**caractérisé en ce que**
- la portion à raccord en queue de rat (250) s'étend jusqu'à la surface d'extrémité de rainure (211) et devient plus étroite et plus plate dans la direction à l'opposé de la surface d'extrémité de rainure (211) et
- du fait que la rainure (210) devient plus plate, la direction longitudinale de la fibre (220) et le plan de la surface d'ouverture de rainure supérieure (250) se trouvent à un angle entre 0,1° et 10,5° l'un par rapport à l'autre ou au moins ne sont pas parallèles l'un à l'autre.

11. Composant (1) selon l'une des revendications précédentes,
**caractérisé en ce que**
- l'attache de fibre (200) comporte en tant que substrat (110) susmentionné un substrat en silicium et la rainure (210) est une rainure (210) gravée dans le substrat en silicium, ayant une section transversale en forme de V et
- les parois de rainure de la rainure (210) et/ou la surface d'extrémité de rainure (211) sont formées par un plan cristallin (111) ou un plan cristallin équivalent à celui-ci ou à considérer équivalent à celui-ci pour des raisons de symétrie, notamment le plan cristallin (1-1-1) du substrat en silicium.

12. Composant (1) selon l'une des revendications précédentes,
**caractérisé en ce que**
- la surface du substrat de l'attache de fibre (200) est formée par un plan cristallin (100) et
- le plan de la surface d'ouverture de rainure supérieure (E210) est parallèle au plan cristallin (100) du substrat.

13. Composant (1) selon l'une des revendications précédentes 11 et 12,
**caractérisé en ce que**
l'angle entre la surface du substrat de l'attache de fibre (200) et le plan cristallin (100) du substrat de l'attache de fibre (200) est compris entre 0,1° et 9,5°.

14. Composant (1) selon l'une des revendications précédentes,
**caractérisé en ce que**
- le substrat de l'attache de fibre (200) est revêtu d'une couche formant entretoise (271), notamment d'une couche d'oxyde de silicium,
- la fibre (220) introduite dans la rainure (210) se termine en hauteur par la couche formant entretoise (271) ou est surplombée par celle-ci et/ou la couche formant entretoise (271), vue dans la direction longitudinale de la fibre (220), forme une butée (A) pour la fibre (220).

15. Composant (1) selon l'une des revendications précédentes,
**caractérisé en ce que**
le substrat (110), notamment le substrat en silicium, de l'attache de fibre (200) possède au moins un évidement de fixation (290) concave dans lequel pénètre avec préhension une portion de fixation (190) convexe associée de la puce (100).
